# EUROPÄISCHE PATENTANMELDUNG

(11) **EP 2 447 624 A2**
(43) Veröffentlichungstag der Anmeldung: **02.05.2012**
(21) Anmeldenummer: 11008663.4
(22) Anmeldetag: 28.10.2011
(51) Int. Cl.: F25B 30/04, F25B 17/08

(54) **Wärmepumpe**

(30) Priorität: 28.10.2010 DE 102010049635
(71) Anmelder: Vaillant GmbH, 42859 Remscheid (DE)
(72) Erfinder: Sick, Jan-Hinrich, 42597 Remscheid (DE); Salg, Frank, 42897 Remscheid (DE); Spahn, Hans-Josef, 40699 Erkrath (DE)
(74) Vertreter: Hocker, Thomas

(57) **Zusammenfassung**

Die Erfindung betrifft eine Wärmepumpe, insbesondere Adsorptions- oder Absorptionswärmepumpe, mit einem Ab- oder Ad-/Desorber und einem Verdampfer/Kondensator sowie mit einem Rohr, das Ab- oder Ad-/Desorber und Verdampfer/Kondensator miteinander verbindet. Zur zeitversetzten Freisetzung der Sorptionswärme bzw. damit verfügbaren Nutzkälte kann der zyklische Prozess angehalten werden, indem ein hermetisch abgedichtetes Ventil in dem Rohr abgesperrt wird. Dieses Ventil wird erfindungsgemäß magnetisch bzw. elektromagnetisch oder durch elektrostatische Kräfte betrieben.

## Beschreibung

Die Erfindung betrifft eine Wärmepumpe, insbesondere Adsorptions- oder Absorptionswärmepumpe und die Verbesserung von Komponenten einer solchen Wärmepumpe zwecks Steigerung der Effizienz und der Verbesserung der Einsatzmöglichkeiten.

Adsorptions- oder Absorptionswärmepumpen, beispielsweise auf der Basis von Zeolith/Wasser, Lithiumbromid/Wasser, Lithiumchlorid/Wasser, Ammoniak/Wasser etc., basieren auf einem zyklischen Prozess, bei dem Ab- oder Ad-/Desorber und Verdampfer/Kondensator mit einem Rohr verbundenen sind. Es wird vorgeschlagen, in dem Rohr ein Absperrventil vorzusehen. Mittels des Ventils kann der Prozess so gestoppt werden, dass eine Möglichkeit zur Abnahme der mit der Sorption erzeugbaren Wärme bzw. Nutzkälte zu beliebigem späteren Zeitpunkt entsteht, man also einen Wärmespeicher erhält. Da diese Prozesse bevorzugt bei Drücken nahe dem Vakuum betrieben werden, ist das Absperrmittel des Ventils hermetisch gegenüber der Umgebung abgedichtet. Die Betätigung des Absperrmittels erfolgt durch ein Wirkprinzip, bei welchem die zur Betätigung des Absperrmittels aufzubringende Energie durch das hermetisch dichte Gehäuse des Vakuumbehälters übertragen wird, ohne dass dafür eine mechanische Durchführung mit beweglich abzudichtenden Flächen nötig wäre. Z.B. können zum Antrieb Magnetkräfte verwendet werden, die durch einen Permanent- oder Elektromagneten aufgebracht werden, oder elektrostatische Kräfte. Das Absperrmittel kann durch Drehung oder durch Hubbewegung wirken.

In einer bevorzugten Weiterbildung kann das Absperrmittel neben den Zuständen offen und geschlossen zusätzlich den Zustand eines Rückschlagventils einnehmen, das in Richtung des Verdampfers/Kondensators geöffnet und in Richtung des Ab- oder Ad-/Desorbers gesperrt ist und/oder zusätzlich den Zustand eines Rückschlagventils einnehmen, das in Richtung des Ab- oder Ad-/Desorbers geöffnet und in Richtung des Verdampfers/Kondensators gesperrt ist. Dadurch kann die Wärmepumpe flexibel als Wärmespeicher eingesetzt werden.

Die Erfindung wird nun anhand der Figuren detailliert erläutert.

Es stellt dar:
- Figur 1:: Eine erfindungsgemäße Wärmepumpe
- Figur 2:: Im Detail eine vorteilhafte Ausgestaltung des Absperrmittels

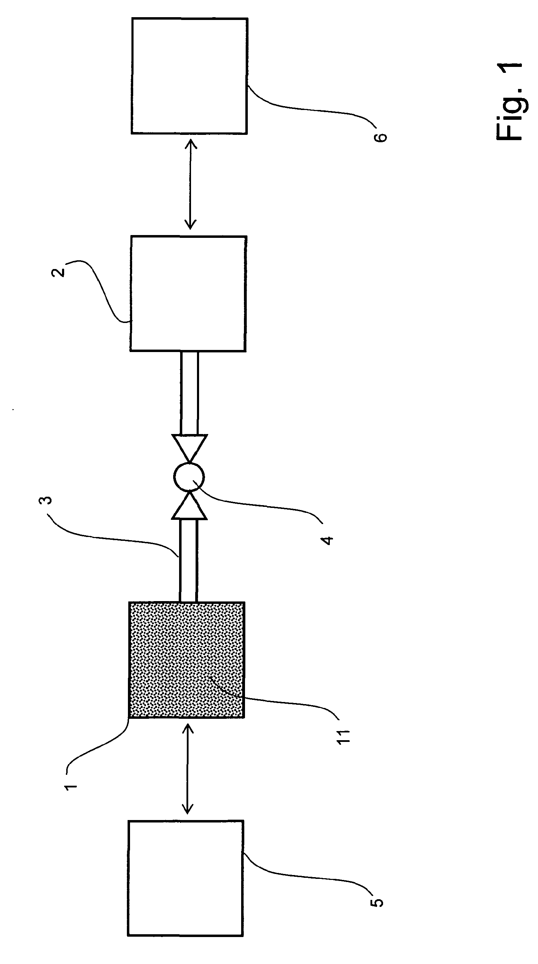

Figur 1 zeigt das Schaltbild einer erfindungsgemäßen Wärmepumpe. Die Wärmepumpe besteht aus einem Ab- oder Ad-/Desorber 1 und einem Kondensator/Verdampfer 2, die einem Rohr 3 miteinander verbunden sind. Ein Absperrmittel 4 verbindet oder trennt Ab- oder Ad-/Desorber 1 und Kondensator/Verdampfer 2. Zusätzlich kann das Absperrmittel in einer Weiterbildung der Erfindung in eine Richtung oder bei einer besonders vorteilhaften Weiterbildung der Erfindung wahlweise in die eine oder in die andere Richtung als Rückschlagventil wirken. Der Ab- oder Ad-/Desorber 1 ist mit einer Wärmequelle 5 thermisch verbindbar, der KondensatorNerdampfer 2 ist mit einer Wärmesenke 6 thermisch verbindbar. Abweichend von der Darstellung in Figur 1 sind aber auch Wärmequelle 5 und Wärmesenke 6 austauschbar. Weiterhin abweichend von Figur 1 kann die hier kombiniert dargestellte Funktion des KondensatorsNerdampfers 2 auch durch jeweils einen oder mehrere separate Kondensatoren und Verdampfer übernommen werden, was in Verbindung mit wenigstens zwei separaten Ab- oder Ad-/Desorbern die Möglichkeit eines kontinuierlichen Betriebs eröffnet. Dazu werden die separaten Ab- bzw. Ad-/Desorber alternierend mit Arbeitsmittel beladen bzw. entladen, womit fortwährend Wärme und Nutzkälte verfügbar gemacht werden können.

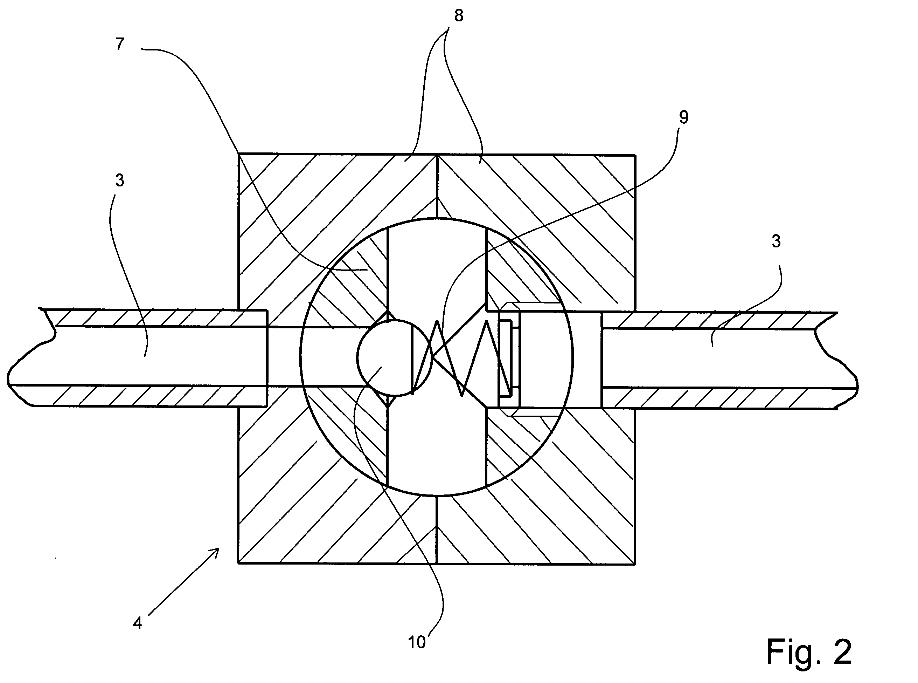

Figur 2 zeigt im Detail das Absperrmittel 4, das in dem Rohr 3 vorgesehen ist. In einem Gehäuse 8 ist ein Küken 7 drehbar angeordnet. Dieses Küken kann beispielsweise, um eine hermetische Dichtigkeit zu gewährleisten, magnetisch von außen betätigt sein. Durch Drehung des Kükens 7 kann das Rückschlagventil in die eine oder in die andere Richtung speren, je nach Drehlage des Kükens 7. Quer zum Rückschlagventil ist eine Durchgangsbohrung vorgesehen, so dass bei einer Drehung des Kükens um 90° die die beiden Abschnitte des Rohres 3 miteinander verbunden sind. Bei einer 45°-Drehung des Kükens 7 ist die Verbindung gesperrt. Zudem kann durch Drehung des Kükens 7 um kleine Winkel der Strömungswiderstand des Absperrmittels ausgehend von der Position, in der die beiden Abschnitte des Rohres 3 miteinander verbunden sind, kontinuierlich verändert werden. Das Rückschlagventil kann zusätzlich mit der Funktion ausgestattet werden, in Durchlassrichtung selbsttätig die Durchflussrate auf einen bestimmten Maximalwert zu begrenzen. Dieses kann z.B. dadurch ermöglicht werden, dass das hier als Kugel 10 bezeichnete Verschlussstück durch den Strömungsdruck entgegen der Kraft der Feder 9 in einen weitere Dichtfläche gedrückt wird. Diese Funktion kann zweckmäßig sein, um die Wärmeleistung des Ab- bzw. Ad-/Desorbers 1 während der Sorptionsphase zu begrenzen.

Adsorptions- oder Absorptionswärmepumpen auf der Basis fester Sorptionsmittel 11 im Ad-/Desorber 1 und verdampfbarer Flüssigkeiten als Arbeitsmittel basieren auf einem zyklischen Prozess, in welchem der im sorbierten Zustand bei sonst gleichen Bedingungen verminderte Dampfdruck des Arbeitsmittels die Transformation eines Wärmestroms von einem niedrigerem Temperaturniveau in einen Wärmestrom auf höherem Temperaturniveau ermöglicht. Der zyklische Sorptionsprozess lässt sich in die Arbeitsphasen Sorption/Beladung und Desorption/Entladung unterteilen. Bei der Desorption wird dem Sorptionsmittel 11 von einer Wärmequelle 5 Wärme zugeführt, um es auf eine Temperatur zu bringen, bei welcher das sorbierte Arbeitsmittel sich als Gas vom Sorptionsmittel 11 löst und aus dem Ad-/ Desorber 1 entfernt werden kann. In einem geschlossenen Sorptionsprozess wird das gasförmige Arbeitsmittel nach der Desorption typischerweise in einen separat angebrachten Kondensator 2 geleitet, welcher durch entsprechende Wärmeableitung an eine Wärmesenke 6 auf eine Temperatur unterhalb des Taupunkts des Arbeitsmitteldampfes gebracht wird. Die aus dem Kondensator 2 abgeführte Wärme kann als Nutzwärme in der Wärmesenke 6 gebraucht oder an einen Rückkühler abgegeben werden. Auf die Desorption folgt die Sorption, bei welcher das zuvor vom Arbeitsmittel befreite Sorptionsmittel 11 erneut mit dem Arbeitsmittel beladen wird. Zu diesem Zweck muss das als flüssiges Kondensat im Kondensator/Verdampfer 2 vorliegende Arbeitsmittel zunächst wieder verdampft werden. Die beim Verdampfungsvorgang aufgenommene Verdampfungswärme des Arbeitsmittels kann zur Einkoppelung von Wärme auf niedrigem Temperaturniveau verwendet werden, z.B. zur Nutzkälteerzeugung. Anstelle der Wärmesenke 6 wird an dieser Stelle also eine Wärmequelle angekoppelt. Das auf niedrigem Temperaturniveau verdampfte Arbeitsmittel wird als Gas in den Ad-/Desorber 1 geleitet. Die bei der Beladung des Sorptionsmittels 11 freiwerdende Sorptionswärme des Arbeitsmittels kann nun bei angepasster Leistung der Wärmeabfuhr auf einem höheren Temperaturniveau ausgekoppelt werden. So kann im Falle der Nutzkälteerzeugung ein zur Rückkühlung bei hoher Umgebungstemperatur geeignetes Temperaturnivau erreicht werden, oder es kann bei der Nutzwärmegewinnung die auf niedrigem Temperaturniveau in den Kondensator 2 eingekoppelte Wärme auf die höhere Temperatur der Nutzwärme angehoben werden. Anstelle von Wärmequelle 5 wird in dieser Phase also eine Wärmesenke angekoppelt.

Unterbricht man den teilweise oder ganz durchgeführten Desorptionsprozess vor der erneuten Beladung des Sorptionsmittels 11, so kann das vom Arbeitsmittel entladene Sorptionsmittel 11 als Wärmespeicher genutzt werden. Die Unterbrechung erfolgt durch das Absperrmittel 4, durch welchen ein Zutritt von Arbeitsmittel zum Ad-/Desorber 1 verhindert wird. Die Beladung kann dann zu einem beliebigen, späteren Zeitpunkt fortgesetzt werden, zu welchem man wieder verdampftes Arbeitsmittel in den Ad-/Desorber 1 leitet. Wird das Absperrmittel in der Desorptionsphase als Rückschlagventil mit Durchlass in Richtung des Kondensators betrieben, so wird die Speicherwirkung ohne äußeren Eingriff erzielt. Um die gespeicherte Wärme zu nutzen, muss dann das Absperrmittel 4 so gestellt werden, dass es das Arbeitsmittel in den Ab- bzw. Ad-/Desorber 1 gelangen lässt.

### Bezugszeichenliste

- 1: Ab- oder Ad-/Desorber
- 2: Kondensator/Verdampfer
- 3: Rohr
- 4: Absperrmittel
- 5: Wärmequelle
- 6: Wärmesenke
- 7: Küken
- 8: Gehäuse
- 9: Feder
- 10: Kugel
- 11: Sorptionsmittel

## Patentansprüche

1. Wärmepumpe, insbesondere Adsorptions- oder Absorptionswärmepumpe, mit einem Ab- oder Ad-/Desorber (1) und einem Verdampfer/Kondensator (2) sowie mit einem Rohr (3), das Ab- oder Ad-/Desorber (1) und Verdampfer/Kondensator (2) miteinander verbindet, **dadurch gekennzeichnet, dass** das Rohr mittels eines Absperrmittels (4) absperrbar ist.

2. Wärmepumpe nach Anspruch 1, **dadurch gekennzeichnet, dass** das Absperrmittel (4) hermetisch abgeschlossen ist, dass das Absperrmittel ein innen liegendes Absperrelement enthält, welches drehbar oder verschiebbar ist, und dass dieses Absperrelement von außen magnetisch mittels eines Permanentmagneten oder eines Elektromagneten oder durch elektrostatische Kräfte in Form einer Dreh- oder Hubbewegung betätigbar ist.

3. Wärmepumpe nach Anspruch 1 oder 2, **dadurch gekennzeichnet, dass** das Absperrmittel (4) zusätzlich die Funktion eines Rückschlagventils und neben dem Zustand geschlossen und geöffnet zusätzlich den Zustand geschlossen in Richtung Verdampfer/Kondensator (2) und geöffnet in Richtung Ab- oder Ad-/Desorber (1) und/oder den Zustand geschlossen in Richtung Ab- oder Ad-/Desorber (1) und geöffnet in Richtung Verdampfer/Kondensator (2) einnehmen kann.

4. Wärmepumpe nach einem der Ansprüche 1 bis 3, **dadurch gekennzeichnet, dass** das Absperrmittel (4) mit der Funktion eines Rückschlagventils ausgestattet ist, welches selbsttätig die Durchflussrate in Durchlassrichtung auf einen bestimmten Wert begrenzt.
